# FASCICULE DE BREVET EUROPEEN

(11) **EP 0 556 129 B1**
(45) Date de publication et mention de la délivrance du brevet: **09.07.1997**
(21) Numéro de dépôt: 93400356.7
(22) Date de dépôt: 11.02.1993
(51) Int. Cl.: F01N 3/28, F01N 3/20, F01N 7/14

(54) **Tubulure d'échappement à paroi catalytique pour moteur à combustion interne**
Abgasleitung mit katalytischer Wand für einen Verbrennungsmotor
Exhaust duct with a catalytic wall, for internal combustion engines

(30) Priorité: 14.02.1992 FR 9201801
(43) Date de publication de la demande: 18.08.1993
(73) Titulaire: INSTITUT FRANCAIS DU PETROLE, 92502 Rueil-Malmaison (FR); ROSI S.A., F-92000 Nanterre (FR)
(72) Inventeur: Prigent, Michel, F-92500 Rueil Malmaison (FR); Durand, Daniel, F-92500 Rueil Malmaison (FR); Favennec, Jean, F-78990 Elancourt (FR)

(56) Documents cités:
- EP-A- 0 415 356
- EP-A- 0 431 405
- EP-A- 0 431 649
- DE-A- 2 242 857
- DE-A- 2 251 631
- FR-A- 2 330 858
- FR-A- 2 444 159
- FR-A- 2 457 978

## Description

La présente invention concerne les lignes d'échappement de véhicules automobiles, traversées par les gaz brûlés rejetés par les moteurs à combustion interne.

Plus précisément, l'invention se rapporte aux pots d'échappement dits "catalytiques" car ils renferment une substance catalytique (un catalyseur) destinée à réduire les substances polluantes, telles que CO, HC, NO_{X}.., contenues dans les gaz d'échappement.

Les normes relatives à la pollution atmosphérique étant de plus en plus sévères dans la plupart des pays industrialisés, les fabriquants de véhicules automobiles mènent de nombreuses recherches, dans différentes voies, afin d'améliorer l'efficacité desdits pots catalytiques.

Un des problèmes majeurs posés par les pots catalytiques concerne le démarrage à froid : lorsque la température des gaz d'échappement n'atteint pas un certain seuil, le pot catalytique est en effet sans action sur les polluants contenus dans les gaz d'échappement. La durée d'amorçage d'un pot catalytique est le temps pendant lequel celui-ci n'agit pas ou agit très peu sur les polluants. De façon courante, cette durée peut être de l'ordre de quelques minutes.

Plusieurs solutions ont été proposées afin de réduire la durée d'amorçage des catalyseurs.

Il est connu, par exemple par les demandes de brevets EP.0.177.479, US-4.376.374, EP-0.340.946... d'isoler de façon très soigneuse le catalyseur et/ou la tubulure d'échappement afin de limiter les pertes thermiques et donc de permettre au catalyseur de chauffer plus rapidement. L'inconvénient de tels systèmes peut résider en une surchauffe des catalyseurs une fois amorcés.

Une autre solution consiste à créer des cheminements différents pour les gaz d'échappement, en fonction de leur température. Le document DE.3.406.968 divulgue une solution de ce type qui n'est cependant pas toujours simple à mettre en oeuvre.

Une autre façon d'améliorer l'efficacité d'un pot catalytique au moment du démarrage à froid du véhicule, vise à rapprocher ce pot du moteur. Mais ceci n'est pas toujours possible compte tenu de la taille du pot et de la place disponible sur le véhicule. On est donc souvent contraint d'utiliser plusieurs pots en série : un premier pot de taille réduite que l'on place au plus près du moteur, suivi d'un deuxième pot de taille supérieure au premier et situé plus loin du moteur. Le premier pot, qui sert à accélérer la dépollution au moment du démarrage, est couramment appelé "pot de light-off".

Sur les moteurs multicylindre ayant des tubulures d'échappement accordées, conçues pour améliorer le remplissage du moteur et sa puissance en fonction des ondes de pression dans l'échappement aux différents régimes moteur, plusieurs "pots de light-off" peuvent être présents, chacun disposé dans la tubulure d'échappement d'un cylindre ou d'un groupe de cylindres donné.

Sur les moteurs deux temps, la puissance du moteur est liée de façon très sensible à la géométrie de la ligne d'échappement en amont du pot de détente des gaz de sorte que la présence d'un catalyseur de light-off, même de petite taille, peut nuire considérablement au bon fonctionnement du moteur par perturbation des ondes de pression dans l'échappement.

C'est pourquoi on ne peut utiliser des catalyseurs de light-off classiques dans les lignes d'échappement des moteurs deux temps.

Par contre, il a déjà été proposé de remplacer les pots de light-off par un revêtement catalytique appliqué directement sur les parois internes des tubulures d'échappement. Le document SAE-790.306 publié en mars 1979 et intitulé "catalyst systems with an emphasis on three-way conversion and novel concepts" envisage un tel revêtement. Selon cette publication, le catalyseur est appliqué soit directement sur la paroi interne du tube d'échappement, soit sur des croisillons métalliques soudés à la paroi interne du tube d'échappement.

Si l'on gagne au niveau ondes de pression avec ce type de catalyseur, en revanche le problème de la durée d'échauffement du catalyseur reste présent car la paroi du tube, refroidie par l'air extérieur, est longue à s'échauffer.

Les inconvénients énoncés ci-dessus peuvent être simultanément palliés grâce à une tubulure d'échappement selon la présente invention.

Une tubulure d'échappement peut comprendre de façon connue un tube externe métallique renfermant une couche d'un catalyseur en contact direct avec les gaz d'échappement et peut comprendre en outre au moins un élément tubulaire interne, sensiblement coaxial audit tube externe et ménageant avec celui-ci au moins un espace, la surface interne dudit tube interne étant recouverte par ladite couche de catalyseur et présente un profil ondulé comme décrit par exemple dans le document FR-A-2 444 159.

Concernant le document DE-A-2 251 631, celui-ci décrit un moyen pour préchauffer un catalyseur, ce moyen étant un conducteur électrique filaire.

Selon l'invention, ledit tube interne est flexible et ladite tubulure comporte en outre des moyens fixés sur la tubulure et permettant la circulation d'un courant électrique dans le tube interne (2), lui-même, afin de réaliser un préchauffage de l'élément tubulaire interne (2).

De façon préférentielle, l'espace compris entre le tube externe et l'élément tubulaire interne peut être rempli d'un élément isolant, tandis que l'épaisseur dudit tube externe peut être comprise entre 0,5 et 1,5 mm.

Avantageusement, l'épaisseur de l'élément tubulaire interne peut être comprise entre 0,2 et 0,8 mm.

En outre, le tube externe peut être réalisé en acier au chrome, tandis que l'élément tubulaire interne peut être réalisé en acier au chrome et à l'aluminium, ou en acier inoxydable aluminié en surface.

Préférentiellement, les métaux nobles utilisés pour former ladite couche catalytique peuvent être le platine, le palladium et/ou le rhodium, lesdits métaux étant déposés à l'état très divisé sur des oxydes à grande surface spécifique.

D'autres détails et avantages de la présente invention apparaîtront mieux à la lecture de la description qui va suivre, faite de façon illustrative et nullement limitative en référence aux dessins annexés sur lesquels :
- la figure 1 est une coupe longitudinale d'un mode de réalisation selon l'art antérieur,
- la figure 2 est une coupe montrant en détail la structure de la tubulure de la figure 1,
- la figure 3 est une coupe longitudinale d'un mode de réalisation de l'invention, et
- la figure 4 est une coupe montrant en détail la structure de la tubulure selon le mode de réalisation de l'invention.

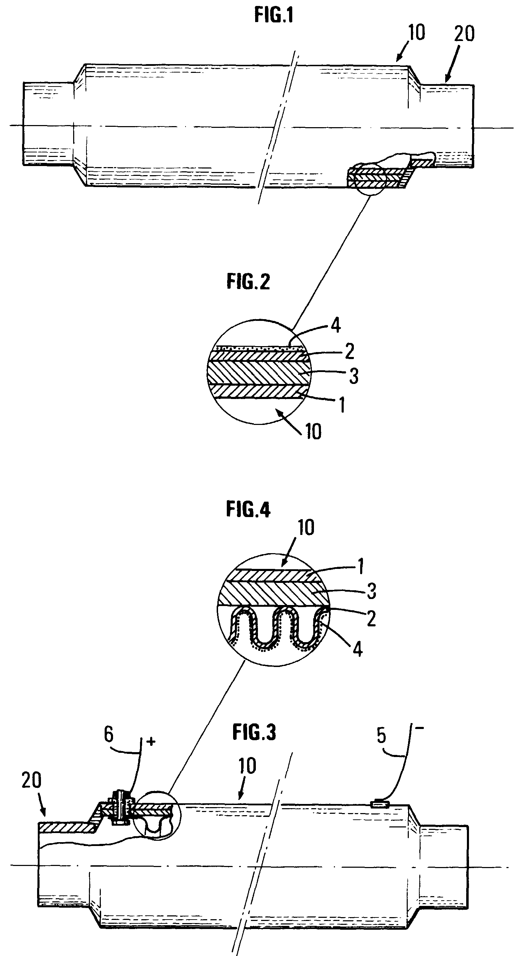

Sur la figure 1, est représentée, en coupe longitudinale, une tubulure 10.

La section de cette tubulure 10 est de préférence, pour des commodités de fabrication, agrandie par rapport à une tubulure simple 20 bien que cette caractéristique ne soit nullement obligatoire.

Vis-à-vis d'un pot catalytique monolithique, en nid d'abeille par exemple, l'encombrement du pot selon l'invention est très réduit.

La tubulure 10 selon l'invention est raccordée par tout moyen connu en soi à la tubulure 20 d'échappement classique.

La figure 2 montre plus en détail la structure de la tubulure.

Cette tubulure est préférentiellement constituée d'un tube externe 1, d'un tube ou élément tubulaire interne 2 coaxial au tube externe 1. Sur le tube interne 2, est déposée, intérieurement, une couche 4 dite catalytique.

Les dimensions des tubes externe 1 et interne 2 sont telles qu'il existe un espace sensiblement annulaire 3 entre-eux, ledit espace pouvant être rempli ou non d'un élément isolant thermique et/ou électrique.

La paroi externe 1 a préférentiellement une épaisseur comprise entre 0,5 mm et 1,5 mm et peut être réalisée, de façon connue en soi, en acier au chrome.

La paroi interne 2, présente préférentiellement une épaisseur comprise entre 0,2 et 0,8 mm et elle peut être réalisée en acier au chrome et à l'aluminium tel que l'acier Gilphal 135 fabriqué par la société Imphy, l'acier Fecralloy commercialisé par la société Sandwik ou l'acier Aluchrom commercialisé par la société VDM, ou encore l'acier Alsichrom commercialisé par la société Thyssen.

La paroi interne peut aussi être réalisée en un acier revêtu en surface d'une couche d'aluminium et ayant subi un traitement de diffusion permettant d'obtenir un alliage réfractaire.

Plus généralement, des alliages de type FeMCr+Al stabilisés par des terres rares sont utilisés, l'élément M étant couramment un élément de la classe de transition et le nickel sera plus particulièrement choisi.

L'espace 3 délimité par les tubes 1 et 2 prédéfinis peut présenter une épaisseur moyenne comprise entre 0,5 mm et 3 mm. La substance isolante éventuellement présente dans cet espace 3 peut être constituée de fibres céramiques par exemple.

La face interne de la tubulure interne 2 est de préférence traitée de la façon suivante afin de pouvoir y déposer des métaux nobles. Une couche d'un oxyde ou mélange d'oxydes à grande surface est appliquée par une technique bien connue de l'homme de métier, par exemple sous forme de barbotine sur la face interne de la tubulure 2.

Les oxydes à grande surface peuvent être choisis parmi des oxydes simples ou mixtes à base d'aluminium issu, tels que Al₂O₃, Al₂O₃ - BaO, Al₂O₃ - CeO₂, Al₂O₃ - CeO₂ - La₂O₃, à base de silicium, de magnésium, de zirconium, de titane, de cérium, de fer, de manganèse, etc...

Il est généralement nécessaire de procéder au préalable à un traitement d'oxydation à haute température du tube interne 2. Ce traitement est destiné à former une sous-couche d'accrochage en alumine à partir de l'aluminium contenu dans le métal.

En outre, un traitement thermique est nécessaire après application de la barbotine afin de conférer à la couche d'oxyde la résistance mécanique suffisante.

Après ce dernier traitement thermique, il est possible de former la couche catalytique 4, c'est-à-dire de déposer des métaux nobles, tels que platine, palladium, et/ou rhodium, sous forme très dispersée sur la couche d'oxyde à grande surface.

Cette opération s'effectue selon des techniques bien connues de l'homme de métier, par exemple par imprégnation d'une solution aqueuse des sels de métaux précités, suivie d'un traitement thermique destiné à décomposer les sels.

La nature et la quantité des métaux nobles déposés est fonction de l'application concernée. Pour le platine par exemple, la quantité pourra être de 1 à 10 milligrammes par d m² de surface couverte.

Le platine peut être remplacé par du palladium utilisé aux mêmes concentrations ou associé à du platine dans un rapport massique de 0,1 à 10. On pourra aussi associer du rhodium au platine et/ou au palladium dans un rapport massique de 0,01 à 1.

De façon courante, l'épaisseur de la couche catalytique 4 est comprise entre 1 et 50 microns.

La figure 3 montre en coupe longitudinale un mode de réalisation de l'invention.

Selon l'invention, la tubulure interne 2 est en effet constituée par un tube métallique flexible de profil ondulé.

La figure 4 montre plus en détail cet arrangement. L'isolant peut être cylindrique, comme montré sur la figure 4, mais il peut aussi remplir davantage l'espace 3 si l'on utilise un produit pulvérulent, une poudre ou toute autre substance isolante capable d'être introduite dans l'espace 3.

Le tube interne ondulé peut être par exemple un tuyau flexible enregistré sous la marque BX BOA et réalisé par la société Française A.C.C. La Jonchère. Ce type de tuyau peut être réalisé à partir de bandes profilées enroulées hélicoïdalement et soudées sur leur longueur.

Ces tuyaux peuvent encore être obtenus à partir d'un feuillard roulé et soudé bord à bord longitudinalement, les ondulations parallèles étant obtenues mécaniquement.

Le tube interne 2 selon ce mode de réalisation de l'invention peut être placé dans le tube externe 1 après cintrage de celui-ci, et éventuellement déjà recouvert de la couche catalytique 4 sur sa face interne.

Bien entendu, le mode de dépôt du catalyseur est préférentiellement identique à celui décrit précédemment.

Les deux tubes concentriques (1 et 2) sont soit réunis uniquement à leurs extrémités, soit soudées par points en différents endroits.

En outre, comme il est visible sur la figure 3, sur la tubulure 10 selon l'invention, sont fixés des moyens 5, 6 permettant la circulation d'un courant électrique d'une extrémité à l'autre du tube métallique interne 2. La couche intermédiaire 3 permet alors d'isoler électriquement le tube externe 1. Tout dispositif connu en soi permettant notamment d'isoler électriquement le tube externe 1 vis-à-vis des moyens de fixation 5 doit être prévu.

Ainsi, un préchauffage du tube interne 2 peut être réalisé par un courant électrique, avant même la mise en marche du moteur (alimentation par la batterie). Ce préchauffage peut, si nécessaire, être maintenu un certain temps après le démarrage, jusqu'à ce qu'une température minimale soit atteinte dans la couche catalytique 4.

## Revendications

1. Tubulure d'échappement pour le traitement catalytique des gaz d'échappement d'un moteur à combustion interne comprenant un tube externe (1) métallique renfermant une couche (4) d'un catalyseur en contact direct avec les gaz d'échappement, et comprenant en outre au moins un élément tubulaire interne (2), sensiblement coaxial audit tube externe (1) et ménageant avec celui-ci au moins un espace (3), la surface interne dudit tube interne (2) étant recouverte par ladite couche (4) de catalyseur et présente un profil ondulé, caractérisée en ce que ledit tube interne (2) est flexible et en ce qu'elle comporte en outre des moyens (5, 6) fixés sur la tubulure et permettant la circulation d'un courant électrique dans le tube interne (2), lui-même, afin de réaliser un préchauffage de l'élément tubulaire interne (2).

2. Tubulure d'échappement selon la revendication 1, caractérisée en ce que l'espace (3) est rempli d'un élément isolant.

3. Tubulure d'échappement selon l'une quelconque des revendications précédentes, caractérisée en ce que l'épaisseur dudit tube externe (1) est comprise entre 0,5 et 1,5 mm.

4. Tubulure d'échappement selon l'une quelconque des revendications précédentes, caractérisée en ce que l'épaisseur de l'élément tubulaire (2) est comprise entre 0,2 et 0,8 mm.

5. Tubulure d'échappement selon l'une quelconque des revendications 2 à 4, caractérisée en ce que l'élément isolant (3) est destiné à isoler thermiquement et/ou électriquement ledit tube externe (1) et en ce que l'épaisseur dudit élément isolant (3) est comprise entre 0,5 et 3 mm.

6. Tubulure d'échappement selon l'une quelconque des revendications précédentes, caractérisée en ce que ledit tube externe (1) est réalisé en acier au chrome.

7. Tubulure d'échappement selon l'une quelconque des revendications précédentes, caractérisée en ce que l'élément tubulaire interne (2) est réalisé en acier au chrome et à l'aluminium, ou en acier au chrome, nickel et à l'aluminium, ou en acier inoxydable aluminé en surface.

8. Tubulure d'échappement selon l'une quelconque des revendications précédentes, caractérisée en ce que les métaux nobles utilisés pour former ladite couche catalytique (4) sont de préférence le platine, le palladium et/ou le rhodium..

## Patentansprüche

1. Auspuff(leitung) für die katalytische Behandlung der Auspuffgase einer Brennkraftmaschine, ein äußeres metallisches Rohr (1) umfassend, das eine Schicht (4) eines Katalysators in direktem Kontakt mit den Auspuffgasen und im übrigen wenigstens ein röhrenförmiges inneres Element (2), das im wesentlichen koaxial zu diesem äußeren Rohr (1) ist, umfaßt und mit diesem wenigstens einen Raum (3) freiläßt, wobei die Innenfläche dieses Innenrohres (2) durch diese Katalysatorschicht (4) abgedeckt ist und ein gewelltes Profil aufweist, dadurch gekennzeichnet, daß dieses innere Rohr (2) flexibel ist und daß es im übrigen Mittel (5, 6), die auf der Auspuff(leitung) befestigt sind, umfaßt, die die Zirkulation eines elektrischen Stroms in dem inneren Rohr (2) selbst ermöglicht, um eine Vorwärmung des inneren röhrenförmigen Elements (2) herbeizuführen.

2. Auspuff(leitung) nach Anspruch 1, dadurch gekennzeichnet, daß der Raum (3) mit einem isolierenden Element gefüllt ist.

3. Auspuff(leitung) nach einem der vorhergehenden Ansprüche, dadurch gekennzeichnet, daß die Dicke dieses äußeren Rohres (1) zwischen 0,5 und 1,5 mm liegt.

4. Auspuff(leitung) nach einem der vorhergehenden Ansprüche, dadurch gekennzeichnet, daß die Dicke des röhrenförmigen Elements (2) zwischen 0,2 und 0,8 mm beträgt.

5. Auspuff(leitung) nach einem der Ansprüche 2 bis 4, dadurch gekennzeichnet, daß das isolierende Element (3) dazu bestimmt ist, thermisch und/oder elektrisch diese äußere Rohr (1) zu isolieren und daß die Dicke dieses isolierenden Elements (3) zwischen 0,5 und 3 mm beträgt.

6. Auspuff(leitung) nach einem der vorhergehenden Ansprüche, dadurch gekennzeichnet, daß dieses äußere Rohr (1) aus Chromstahl hergestellt ist.

7. Auspuff(leitung) nach einem der vorhergehenden Ansprüche, dadurch gekennzeichnet, daß das innere röhrenförmige Element (2) aus Chrom- und Aluminiumstahl oder aus Chrom-, Nickel- und Aluminiumstahl oder aus an der Oberfläche aluminisiertem rostfreiem Stahl hergestellt ist.

8. Auspuff(leitung) nach einem der vorhergehenden Ansprüche, dadurch gekennzeichnet, daß die zur Bildung dieser katalytischen Schicht (4) verwendeten Edelmetalle, bevorzugt Platin, Palladium und/oder Rhodium... sind.

## Claims

1. An exhaust manifold for the catalytic treatment of exhaust gases from an internal combustion engine comprising an external, metal pipe (1) enclosing a layer (4) of a catalyst in direct contact with the exhaust gases, and having in addition at least one internal tubular element (2) essentially coaxial with the said external pipe (2) and forming in conjunction therewith at least one space (3), the internal surface of the said internal pipe (2) being coated with the said layer (4) of catalyst and having a corrugated profile, characterised in that the said internal pipe (2) is flexible and also has means (5, 6) allowing an electric current to flow inside the internal pipe (2) itself, in order pre-heat the internal tubular element (2).

2. An exhaust manifold as claimed in claim 1, characterised in that the space (3) is filled with an insulating element.

3. An exhaust manifold as claimed in any one of the preceding claims, characterised in that the thickness of the said external pipe (1) is within the range between 0.5 and 1.5 mm.

4. An exhaust manifold as claimed in any one of the preceding claims, characterised in that the thickness of the tubular element (2) is within the range between 0.2 and 0.8 mm.

5. An exhaust manifold as claimed in any one of claims 2 to 4, characterised in that the insulating element (3) is designed to insulate thermally and/or isolate electrically the said external pipe (1) and in that the thickness of the said insulating element (3) is within the range between 0.5 and 3 mm.

6. An exhaust manifold as claimed in any one of the preceding claims, characterised in that the said external pipe (1) is made from chromium steel.

7. An exhaust manifold as claimed in any one of the preceding claims, characterised in that the internal tubular element (2) is made from chromium and aluminium steel or from chromium, nickel and aluminium steel or from surface-aluminised stainless steel.

8. An exhaust manifold as claimed in any one of the preceding claims, characterised in that the noble metals used to form the said layer (4) of catalyst are preferably platinum, palladium and/or rhodium.
